Europäisches Patentamt

European Patent Office

Office européen des brevets

(19)

(11) Veröffentlichungsnummer: **0 054 755**
**B1**

(12) **EUROPÄISCHE PATENTSCHRIFT**

(45) Veröffentlichungstag der Patentschrift:
04.06.86

(21) Anmeldenummer: **81109882.1**

(22) Anmeldetag: **25.11.81**

(51) Int. Cl.⁴: **C 08 G 12/32**, C 08 G 12/38, C 08 L 61/28

(54) Verfahren zur Herstellung von lagerstabilen wässrigen Lösungen von Melamin-Formaldehydharzen.

(30) Priorität: **22.12.80 DE 3048448**

(43) Veröffentlichungstag der Anmeldung:
**30.06.82 Patentblatt 82/26**

(45) Bekanntmachung des Hinweises auf die Patenterteilung:
**04.06.86 Patentblatt 86/23**

(84) Benannte Vertragsstaaten:
**AT DE FR GB IT SE**

(56) Entgegenhaltungen:
**CH - A - 362 228**
**DE - A - 1 570 240**
**GB - A - 691 053**

**CHEMICAL ABSTRACTS, Band 88, No. 24, 12. Juni 1978, Zusammenfassung 171107m, Seite 45 COLUMBUS, OHIO (US)**

(73) Patentinhaber: **CHEMIE LINZ AKTIENGESELLSCHAFT, St. Peter-Strasse 25, A-4020 Linz (AT)**

(84) Benannte Vertragsstaaten: **FR GB IT SE AT**

(73) Patentinhaber: **Lentia Gesellschaft mit beschränkter Haftung, Arabellastrasse 4 Postfach 81 05 08, D-8000 München 81 (DE)**

(84) Benannte Vertragsstaaten: **DE**

(72) Erfinder: **Heger, Friedl, Altenbergerstrasse 5, D-4040 Linz (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von lagerstabilen wasserlöslichen Melamin-Formaldehydharzen eines molaren z.B. für Tränk- und Leimharze typischen Melamin-Formaldehydverhältnisses von 1:1,7–3,5 durch Zugabe von Harnstoff, wobei eine beträchtliche Erhöhung der Lagerstabilität bis auf viele Wochen erzielt werden kann, im Gegensatz zur Lagerstabilität von unbehandelten Harzen, die nur einige Tage beträgt.

Es sind Verfahren bekannt, welche Harnstoff bzw. Thioharnstoff als Stabilisator von Harnstoffharzen verwenden (z.B. DE-AS 1 570 240). Dieses Verfahren ist dadurch gekennzeichnet, dass man wässrige Lösungen von Tränkharzen, welche nebeneinander die beschränkt wasserlöslichen Kondensationsprodukte aus Formaldehyd und aminoplastbildenden Verbindungen und die ersten Umsetzungsprodukte aus Formaldehyd und aminoplastbildenden Verbindungen enthalten, wobei das Gewichtsverhältnis dieser beiden Komponenten 1:3 bis 3:1 beträgt, bei einem pH-Wert von 7,0 bis 8,5 auf 50–60 °C erwärmt und der Lösung gegebenenfalls 5–15% Harnstoff und/oder Thioharnstoff bezogen auf den Feststoffgehalt zusetzt.

Überraschenderweise wurde nun gefunden, dass die Lagerstabilität wässriger Lösungen von Melamin-Formaldehydharzen, soferne ihr molares Melamin-Formaldehydverhältnis zwischen 1:1,7–3,5 liegt durch einfache Zugabe von Harnstoff wesentlich erhöht wird, wenn man vor und nach der Auflösung des Harnstoffes in der Harzlösung bzw. der wässrigen Mischung der beiden Ausgangsprodukte bestimmte enge, aber leicht zu kontrollierende pH-Bereiche einstellt. Es ist also nicht wie gemäss dem zitierten Stand der Technik erforderlich, zuerst zwei verschieden hoch kondensierte Harzlösungen herzustellen, sie dann in bestimmten Mengenverhältnissen zu mischen, zusätzlich ein bestimmtes pH-Bereich einzustellen und erst dann die Harnstoffkomponente in Mengen bis zu 5–15 Gew.% bezogen auf den Feststoffgehalt zuzusetzen.

Da ferner Harnstoff weniger reaktiv als Melamin ist, war nicht zu erwarten, dass er zur Stabilisierung von Melaminharzlösungen geeignet sein könnte.

Entsprechend ist Harnstoff bei Melaminharzen bisher nur zur Stabilisierung von sauren kolloidalen Harzlösungen (GB-A-691 053), also sehr untypischen und von Tränkharzen völlig verschiedenen Harzen verwendet worden.

Gegenstand der Erfindung ist somit ein Verfahren zur Herstellung von lagerstabilen wässrigen alkalischen Lösungen von Melamin-Formaldehydharzen unter Zusatz von Harnstoff nach erfolgter Kondensation, welches dadurch gekennzeichnet ist, dass wässrige Mischungen von Melamin und Formaldehyd eines molaren Melamin-Formaldehydverhältnisses von 1:1,7–3,5 bei Raumtemperatur auf pH-Werte zwischen 8,5–9,5 eingestellt werden, anschliessend bei Temperaturen von etwa 90 °C bis Rückflusstemperatur bis zu einem Kondensationsgrad kondensiert werden, der einer Wasserverträglichkeit von 3,0 bis 5,0 entspricht und dann auf Temperaturen zwischen 25 und 50 °C gekühlt werden, worauf eine neuerliche pH-Werteinstellung auf Werte zwischen 7–9,6 durchgeführt und der Harnstoff in Mengen von 1–10 Gew.% bezogen auf das Flüssigharz mit einem Feststoffgehalt von 50–65 Gew.%, zugesetzt wird, worauf die Harzlösungen auf pH-Werte zwischen 9,2 bis 11,5 eingestellt werden.

Die wässrigen Mischungen, die man erhält, wenn man Melamin in Formaldehyd löst, weisen bei Raumtemperatur pH-Werte von etwa 4–7 auf. Dieser pH-Bereich wird erfindungsgemäss auf pH-Werte von 8,5–9,5 angehoben. Auch diese Massnahme ist zur Erzielung des erfindungsgemässen Effektes wesentlich. Die anschliessende Harzherstellung kann vor allem bis zu allen Kondensationsgraden durchgeführt werden, die für Tränkharze üblich sind. Sie richtet sich wie üblich nach dem beabsichtigten Anwendungszweck. Zweckmässigerweise wird bis zu Kondensationsgraden kondensiert, die einer Wasserverträglichkeit zwischen 3,0–5,0 entsprechen. (Die Wasserverträglichkeit ist diejenige Volumsmenge Wasser von ursprünglich 20 °C, die beim Vermischen mit 1 Volumsteil Harzlösung, welche dem Harzansatz noch vor dem Abkühlen entnommen worden ist, eine beginnende Trübung zeigt).

Nach Beendigung der Kondensationsreaktion wird das Reaktionsgemisch auf 25–50 °C abgekühlt und bei dieser Temperatur der Harnstoff in der erfindungsgemäss vorgesehenen Menge zugesetzt. Bevorzugt wird eine Menge von 2–6 Gew.%, bezogen auf das Flüssigharz mit einem Feststoffgehalt von 50–65 Gew.% gewählt. Um die stabilisierende Wirkung des Harnstoffes zu verstärken, muss die Harzlösung vor der Harnstoffzugabe auf pH-Werte von 7–9,6 nachgestellt werden. Dies geschieht ja nach pH-Wert der Reaktionsmischung durch Zugabe einer schwachen Säure, z.B. Ameisensäure, oder einer verdünnten Lauge, z.B. NaOH. Nach Auflösung des Harnstoffes im Harz wird eine weitere Verbesserung der Lagerstabilität dadurch erzielt, dass ein End- bzw. Lager-pH-Wert von 9,2 bis 11,5 vorzugsweise 10–11 eingestellt wird.

Zu den erfindungsgemässen pH-Werteinstellungen ist zu sagen, dass sie sich zwar teilweise überschneiden, in allen drei Fällen aber verschiedene Systeme betreffen. Die erste Einstellung erfolgt in der unkondensierten Melamin-Formaldehydlösung, die zweite im daraus hergestellten, auf den gewünschten Kondensationsgrad gebrachten und auf 25–50 °C abgekühlten Harz vor der Harnstoffzugabe, bzw. Harnstoffauflösung in diesem Harz und die dritte nach erfolgter Auflösung des Harnstoffes bei Raumtemperatur.

Die Harnstoffzugabe führt allenfalls zu einem leichten Ansteigen des pH-Wertes, eine weitere Anhebung auf den erfindungsgemässen Bereich von 9,2 bis 11,5 vorzugsweise 10 bis 11, ist aber stets erforderlich.

Die so hergestellten Lösungen von Melamin-Formaldehydkondensationsprodukten weisen in

der Regel einen Feststoffgehalt von etwa 50–65 Gew.% auf und besitzen eine Lagerstabilität von etwa 4 bis 10 Wochen, je nachdem welche Bedingungen innerhalb der erfindungsgemässen Grenzen zur Anwendung kommen. Während der Lagerzeit ist ein langsamer Viskositätsanstieg zu verzeichnen, der aber die Verarbeitbarkeit nicht wesentlich beeinflusst. Ebenso sind gelegentlich auftretende Trübungen für die Verarbeitbarkeit ohne Bedeutung.

Gemäss einer besonders bevorzugten Ausführungsform der vorliegenden Erfindung, die zu Harzen mit noch weiter verbesserten Eigenschaften führt, wird die Kondensation der Harzbestandteile Melamin und Formaldehyd nach Einstellung des pH-Wertes auf den Kondensations-pH von 8,5 bis 9,5 in Gegenwart eines aliphatischen ein- oder zweiwertigen Alkohols mit 1 bis 4 Kohlenstoffatomen durchgeführt. Durch diese Massnahme kann der Viskositätsanstieg während der Lagerzeit noch vermindert werden (beispielsweise nur 2–5 sec, gemessen nach DIN 53211,4 mm Düse), sodass solche Harze besonders günstige Eigenschaften für Imprägnierungen und Tauchungen aufweisen. Ferner bleiben die Lösungen länger klar. Überdies wird durch diese zusätzliche Massnahme in den meisten Fällen noch eine weitere Verlängerung der Haltbarkeit über jene Zeit hinaus erzielt, die durch die erfindungsgemässe Harnstoffzugabe erreicht wird.

Als solche Alkohole sind z.B. Methanol, Äthanol, n-Propanol, Isopropanol, Äthylenglykol, Diäthylenglykol, n-Butanol und Isobutanol zu nennen, wobei Butanol und Isobutanol besonders bevorzugt sind.

Die Durchführung des erfindungsgemässen Verfahrens in Gegenwart der Alkohole geschieht zweckmässig in der Weise, dass die wässrige Mischung der Harzkomponenten nach Einstellung des pH-Wertes für die Kondensationsreaktion auf die gewünschte Kondensationstemperatur erwärmt und anschliessend der Alkohol langsam zudosiert wird. Anschliessend wird die Kondensation fortgeführt, bis der gewünschte Kondensationsgrad erreicht ist.

Die Menge an dem Alkohol, die zugesetzt wird, schwankt etwas in Abhängigkeit von der Natur des Harzes und des Alkohols, liegt aber meist im Bereich zwischen 3 und 10 Gew.%, bezogen auf das Gewicht der Reaktionsmischung. Vorzugsweise werden 3 bis 8 Gew.% an dem Alkohol zugesetzt.

Die erfindungsgemäss hergestellten wässrigen Lösungen von Melamin-Formaldehydharzen sind auf Grund ihrer guten Imprägnierfähigkeit und Verarbeitbarkeit, die bis an die Grenze der Lagerstabilität erhalten bleibt, für die Beschichtung von Span-, Faser- und Schichtstoffplatten mit imprägnierten Dekorpapieren und Verarbeitung unter Druck, zwecks Herstellung von dekorativen Oberflächen ausgezeichnet geeignet.

Das erfindungsgemässe Verfahren ist aber nicht auf die Herstellung von Harzen für Imprägnierzwecke beschränkt, sondern ist auch zur Stabilisierung von wässrigen Lösungen anderer Melamin-Formaldehydharze mit etwas höherem Kondensationsgrad z.B. von Leimharzen geeignet.

Die folgenden Beispiele sollen das erfindungsgemässe Verfahren näher erläutern.

Beispiel 1:
In ein Rührgefäss aus Glas oder Edelstahl werden 3680,5 g wässrige Formaldehydlösung (36,7%ig) 819,5 g $H_2O$ und 3153,3 g Melamin entsprechend einem Verhältnis Formaldehyd zu Melamin von 1,8:1 eingebracht und mit 0,1 n NaOH auf einen pH-Wert von 9,2 gestellt. Die Mischung wird in etwa 50 Minuten auf Rückflusstemperatur erhitzt. Bei dieser Temperatur wird bis zu einer Wasserverträglichkeit von 4,0 die wie oben definiert ist, kondensiert.

Nun wird der Ansatz in etwa einer Stunde auf 40°C abgekühlt. Der pH-Wert des Harzes wird mit 25%iger Ameisensäure auf 8,8 gestellt und anschliessend werden 229,5 g Harnstoff (3 Gew.% bezogen auf das Flüssigharz) zugesetzt. Nach dem Lösen des Harnstoffs wird der End-pH-Wert des Harzes bei etwa 25°C mit 0,1 n Natronlauge auf 10,1 gestellt.

Die Haltbarkeit dieser Harzlösung beträgt etwa 8 Wochen.

Beispiel 2:
Es wurde wie in Beispiel 1 verfahren, jedoch wurde der End-pH-Wert des Harzes bei 20–25°C auf 9,4 gestellt.
Haltbarkeit: etwa 6 Wochen.

Beispiel 3:
Es wurde wie in Beispiel 1 verfahren, jedoch wurde der End-pH-Wert des Harzes bei 20–25°C auf 11,0 gestellt.
Haltbarkeit: etwa 10 Wochen.

Beispiel 4:
In einem Rührgefäss auf Glas oder Edelstahl werden 994,48 g Formalin 36,2%ig, 205,5 g $H_2O$ und 504 g Melamin entsprechend einem Verhältnis Formaldehyd zu Melamin von 3:1 eingebracht. Diese Mischung wird auf einen pH-Wert von 9,2 gestellt und in ca. 30 Minuten auf Rückflusstemperatur erhitzt. Bei dieser Temperatur wird bis zu einer Wasserverträglichkeit von 3,5–4,0 kondensiert. Nun wird die Harzlösung auf 40°C abgekühlt und der pH-Wert mit 25% HCOOH auf 8,8 eingestellt. Anschliessend werden 51,12 g Harnstoff (3 Gew.% bezogen auf Flüssigharz) zugegeben und nach Lösen des Harnstoffs bei ca. 20–25°C der pH-Wert des Harzes auf 10,1 gestellt.
Haltbarkeit etwa 8 Wochen.

Beispiel 5:
Es wird wie in Beispiel 1 verfahren, jedoch werden 10% Harnstoff zugesetzt.
Haltbarkeit: etwa 4 Wochen.

Beispiel 6:
Es wird wie in Beispiel 1 verfahren, jedoch werden 1,5% Harnstoff zugesetzt.
Haltbarkeit: etwa 4 Wochen.

**Beispiel 7:**

In einem Rührgefäss aus Glas oder Edelstahl werden 437,85 g CH$_2$O (36%ig), 102,15 g H$_2$O und 378,79 g Melamin entsprechend einem Verhältnis von Formaldehyd zu Melamin von 1,8:1 eingebracht und auf einen pH-Wert von 8,7 gestellt. Die Mischung wird in etwa 30 Minuten auf 98°C erhitzt. Bei dieser Temperatur wird bis zu einer Wasserverträglichkeit von 4,6 kondensiert. Nun wird der Ansatz in etwa einer Stunde auf 40°C abgekühlt und bei dieser Temperatur der pH-Wert des Harzes mit 0,1 n Natronlauge auf 9,6 gestellt. Anschliessend werden 27,56 g Harnstoff (3 Gew.% bezogen auf Flüssigharz) zugesetzt. Nach dem Lösen des Harnstoffs wird der End-pH-Wert des Harzes bei ca. 25°C auf 10,0 gestellt.

Haltbarkeit: etwa 5 Wochen.

**Beispiel 8:**

Es wurde wie in Beispiel 1 verfahren, jedoch wurde der pH-Wert des Harzes vor der Harnstoffzugabe auf pH 7,0 gestellt.

Haltbarkeit: etwa 8 Wochen.

**Beispiel 9:**

In ein Rührgefäss aus Glas oder Edelstahl, das mit Rückflusskühler und Thermometer ausgerüstet ist, werden 353,2 g wässrige Formaldehydlösung (36,1%ig), 71,8 g Wasser und 315 g Melamin entsprechend einem Verhältnis von Formaldehyd zu Melamin von 1,7:1 eingebracht, worauf der pH-Wert der Mischung auf 9,2 eingestellt wird. Die Mischung wird innerhalb von etwa 30 Minuten auf Rückflusstemperatur erhitzt und daraufhin portionsweise mit 35,8 g n-Butanol (4,8 Gew.% bezogen auf das Reaktionsgemisch) versetzt. Man kondensiert anschliessend bei Rückflusstemperatur bis zu einer wie oben definierten Wasserverträglichkeit von 4,0, worauf das Reaktionsgemisch innerhalb von etwa 1 Stunde auf 40°C abgekühlt wird. Nach Einstellen des pH-Wertes auf 8,8 werden 22,24 g Harnstoff, das sind 3 Gew.% bezogen auf die flüssige Harzmischung, zugesetzt. Nach Auflösung des Harnstoffes im Reaktionsgemisch wird bei 25°C ein End-pH-Wert der Mischung von 10,1 eingestellt. Die Haltbarkeit dieser Harzlösung beträgt etwa 13 Wochen.

**Beispiel 10:**

332,4 g 36%ige Formaldehydlösung, 67,6 g Wasser und 252 g Melamin entsprechend einem Formaldehyd-Melamin-Verhältnis von 2:1 werden nach Einstellung eines pH-Wertes von 9,0 wie in Beispiel 9 beschrieben auf Rückflusstemperatur innerhalb von 30 Minuten aufgeheizt und langsam mit 32,6 g n-Butanol (5 Gew.% bezogen auf den Reaktionsansatz) versetzt. Anschliessend wird durch weiteres Erhitzen auf Rückflusstemperatur kondensiert, bis eine Wasserverträglichkeit von 4,0 erreicht ist. Nun wird das Gemisch innerhalb von 1 Stunde auf 40°C gekühlt, der pH-Wert auf 8,8 eingestellt und das Gemisch mit 20,53 g Harnstoff (3 Gew.% bezogen auf das Reaktionsgemisch) versetzt. Nach Auflösung des Harnstoffes wird ein End-pH-Wert von 11,0 eingestellt. Haltbarkeit der Harzlösung etwa 15 Wochen.

**Beispiel 11:**

In ein Rührgefäss wie in Beispiel 9 beschrieben werden 423,8 g wässrige 36,1%ige Formaldehydlösung, 86,2 g Wasser und 214,2 g Melamin entsprechend einem Verhältnis von Formaldehyd zu Melamin von 3:1 eingebracht, ein pH-Wert von 9,2 wird eingestellt und die Kondensationsreaktion wie in Beispiel 9 beschrieben unter Zugabe von 36,2 g Butanol (5 Gew.% bezogen auf Flüssigharz) durchgeführt. Nach weiterer Behandlung wie in Beispiel 9 werden 22,81 g Harnstoff zugesetzt (3 Gew.%) und ein End-pH-Wert von 10,1 eingestellt. Die Haltbarkeit der Lösung beträgt rund 23 Wochen.

**Beispiel 12:**

Ein Harzansatz mit einem Formaldehyd-Melaminverhältnis von 2:1 gemäss Beispiel 10 wird nach Einstellung eines pH-Wertes von 9,2 wie in Beispiel 10 beschrieben, jedoch unter Zugabe von 13,04 g n-Butanol (2% bezogen auf das Gewicht des Reaktionsansatzes) kondensiert, bis eine Wasserverträglichkeit von 4,0 erreicht ist. Nach Aufarbeitung und Harnstoffzugabe wie in Beispiel 10 beschrieben, wird ein End-pH von 10,1 eingestellt. Die Haltbarkeit der Harzlösung beträgt etwa 6 Wochen.

Verfährt man in gleicher Weise, jedoch unter Zugabe von verschiedenen Mengen an n-Butanol, so erhält man folgende Haltbarkeiten:

| Butanolmenge | Haltbarkeit |
| --- | --- |
| 3 Gew.% n-Butanol | 8 Wochen |
| 7 Gew.% n-Butanol | 10 Wochen |
| 10 Gew.% n-Butanol | 10 Wochen |

**Beispiel 13:**

In ein Rührgefäss wie in Beispiel 9 beschrieben, werden 400 g einer 30%igen Formalinlösung und 252 g Melamin entsprechend einem Verhältnis von Formaldehyd zu Melamin von 2,0:1 eingetragen, worauf der pH-Wert der Mischung auf 9,0 eingestellt wird. Die Mischung wird innerhalb von 30 Minuten auf Rückflusstemperatur erhitzt, dann langsam mit 32,6 g reinem Äthanol (5 Gew.% bezogen auf das Gewicht des Reaktionsgemisches) versetzt und die Kondensation bis zu einer Wasserverträglichkeit von 4,0 fortgeführt. Der Harzansatz wird dann innerhalb einer Stunde auf 40°C gekühlt, auf einen pH-Wert von 8,8 eingestellt und mit 20,53 g Harnstoff (3 Gew.% bezogen auf Reaktionsgemisch) versetzt. Nach Auflösen des Harnstoffes wird ein End-pH-Wert von 11,0 eingestellt.

Die Haltbarkeit der Harzlösung beträgt etwa 11 Wochen.

Werden anstelle von Äthanol gleiche Mengen an anderen Alkoholen eingesetzt, so erhält man folgende Ergebnisse:

| Alkohol | Menge | Haltbarkeit |
|---|---|---|
| Methanol | 5 Gew.% | 11,5 Wochen |
| n-Propanol | 5 Gew.% | 10 Wochen |
| Isopropanol | 5 Gew.% | 7 Wochen |
| Isobutanol | 5 Gew.% | 14 Wochen |
| Äthylenglykol | 5 Gew.% | 6 Wochen |

## Patentansprüche

1. Verfahren zur Herstellung lagerstabiler wässriger alkalischer Lösungen von Melamin-Formaldehydharzen unter Zusatz von Harnstoff nach erfolgter Kondensation, dadurch gekennzeichnet, dass

wässrige Mischungen von Melamin und Formaldehyd eines molaren Melamin-Formaldehydverhältnisses von 1:1,7–3,5 bei Raumtemperatur auf pH-Werte von 8,5–9,5 eingestellt werden, anschliessend bei Temperaturen von etwa 90°C bis Rückflusstemperatur bis zu einem Kondensationsgrad kondensiert werden, der einer Wasserverträglichkeit von 3,0 bis 5,0 entspricht

und dann auf Temperaturen zwischen 25 und 50°C gekühlt werden, worauf eine neuerliche pH-Werteinstellung auf Werte zwischen 7–9,6 durchgeführt

und Harnstoff in Mengen von 1–10 Gew.% bezogen auf das Flüssigharz mit einem Feststoffgehalt von 50–65 Gew.% zugesetzt wird,

worauf die Harzlösungen auf pH-Werte zwischen 9,2 bis 11,5 eingestellt werden.

2. Verfahren nach Anspruch 1, dadurch gekennzeichnet, dass man den Harnstoff in Mengen zwischen 2 bis 6 Gew.% zusetzt.

3. Verfahren nach den Ansprüchen 1 und 2, dadurch gekennzeichnet, dass nach der Harnstoffzugabe zu der Harzlösung ein pH-Bereich zwischen 10–11,0 eingestellt wird.

4. Verfahren nach den Ansprüchen 1 bis 3, dadurch gekennzeichnet, dass die Kondensation bei 90°C bis Rückflusstemperatur in Gegenwart von ein- oder mehrwertigen aliphatischen Alkoholen mit 1–4 C-Atomen durchgeführt wird.

5. Verfahren nach Anspruch 4, dadurch gekennzeichnet, dass die wässrige Mischung nach Einstellung des pH-Wertes auf 8,5–9,5 bis zur Kondensationstemperatur erhitzt, der Alkohol portionsweise zugesetzt und die Kondensation bis zum gewünschten Kondensationsgrad vorgenommen wird.

6. Verfahren nach den Ansprüchen 4 und 5, dadurch gekennzeichnet, dass der Alkohol in einer Menge von 3–8 Gew.% bezogen auf die Menge an Reaktionsgemisch zugesetzt wird.

7. Verfahren nach den Ansprüchen 4 bis 6, dadurch gekennzeichnet, dass der Alkohol Butanol oder Isobutanol ist.

## Claims

1. Process for the preparation of aqueous alkaline solutions of melamine/formaldehyde resins with addition of urea when condensation is complete, the said solutions having a long shelf life, wherein aqueous mixtures of melamine and formaldehyde having a molar ratio of melamine to formaldehyde of from 1:1.7 to 1:3.5 are brought to pH values of 8.5–9.5 at room temperature, are then condensed at temperatures from 90°C to the reflux temperature to give a degree of condensation which corresponds to a compatability of 3.0 to 5.0 with water, and then cooled to temperatures between 25 and 50°C, after which a further pH adjustment to values between 7 and 9.6 is carried out and urea is added in amounts of 1–10% by weight, relative to the liquid resin having a solids content of 50–65% by weight, and the resin solutions are then brought to pH values of between 9.2 and 11.5.

2. Process according to Claim 1, characterised in that the urea is added in amounts of between 2 and 6% by weight.

3. Process according to Claims 1 and 2, characterised in that the pH is adjusted to a range between 10 and 11.0 after urea has been added to the resin solution.

4. Process according to Claims 1 to 3, characterised in that condensation is carried out at from 90°C to the reflux temperature, in the presence of monohydric or polyhydric aliphatic alcohols having 1–4 C atoms.

5. Process according to Claim 4, characterised in that the aqueous mixture is heated to condensation temperature after the pH value has been brought to 8.5–9.5, the alcohol is added in portions, and the condensation is carried out until the desired degree of condensation is reached.

6. Process according to Claims 4 and 5, characterised in that the alcohol is added in an amount of 3–8% by weight, relative to the amount of reaction mixture.

7. Process according to Claims 4 to 6, characterised in that the alcohol is butanol or isobutanol.

## Revendications

1. Procédé pour la préparation de solutions alcalines aqueuses stables au magasinage de résines mélamine-formaldéhyde par addition d'urée une fois la condensation effectuée, caractérisé en ce qu'on règle des mélanges aqueux de mélamine et de formaldéhyde d'un rapport molaire mélamine-formaldéhyde de 1:1,7–3,5, à la température ambiante, à des valeurs de pH comprises entre 8,5 et 9,5, puis on condense à des températures d'environ 90°C à la température de reflux jusqu'à un degré de condensation qui correspond à une compatibilité à l'eau de 3,0 à 5,0 et ensuite on refroidit à des températures comprises entre 25 et 50 °C, après quoi on effectue à nouveau un réglage de pH à des valeurs comprises entre 7 et 9,6 et on ajoute l'urée selon des quantités de 1 à 10% en poids sur la base de la résine liquide ayant une teneur en solides de 50 à 65% en poids, après quoi on règle les solutions de résine à des valeurs de pH comprises entre 9,2 et 11,5.

2. Procédé suivant la revendication 1, caractérisé en ce qu'on ajoute l'urée selon les quantités comprises entre 2 et 6% en poids.

3. Procédé suivant les revendications 1 et 2, caractérisé en ce que, après l'addition d'urée à la solution de résine, on règle à une gamme de pH comprise entre 10 et 11,0.

4. Procédé suivant les revendications 1 à 3, caractérisé en ce qu'on effectue la condensation de 90 °C à la température de reflux en présence d'alcools aliphatiques mono- ou polyvalents ayant de 1 à 4 atomes de carbone.

5. Procédé suivant la revendication 4, caractérisé en ce qu'on chauffe le mélange aqueux, après réglage du pH à 8,5–9,5, jusqu'à la température de condensation, on ajoute l'alcool par fractions et on effectue la condensation jusqu'au degré de condensation désiré.

6. Procédé suivant les revendications 4 et 5, caractérisé en ce qu'on ajoute l'alcool selon une quantité de 3 à 8% en poids sur la base de la quantité de mélange réactionnel.

7. Procédé suivant les revendications 4 à 6, caractérisé en ce que l'alcool est du butanol ou de l'isobutanol.